# EUROPEAN PATENT SPECIFICATION

(11) **EP 0 645 964 B1**
(45) Date of publication and mention of the grant of the patent: **09.10.1996**
(21) Application number: 94912680.9
(22) Date of filing: 14.04.1994
(51) Int. Cl.: A01N 43/88, A01N 25/30, A01N 25/04

(54) **HERBICIDAL COMPOSITION**
HERBIZIDE ZUSAMMENSETZUNG
COMPOSITION HERBICIDE

(30) Priority: 16.04.1993 JP 112364/93
(43) Date of publication of application: 05.04.1995
(73) Proprietor: DOWELANCO, Indianapolis, Indiana 46268-1054 (US)
(72) Inventor: OGAWA, Toshiya, Hadano-shi, Kanagawa 257 (JP); KATAHASHI, Hisao, Ogori-shi, Fukuoka 838-01 (JP)
(74) Representative: Kraus, Walter, Dr.
(86) International application number: JP9400623
(87) International publication number: WO9423578

(56) References cited:
- EP-A- 0 302 203
- EP-A- 0 330 904
- DE-A- 3 707 711

## Description

### Technical Field

This invention relates to a herbicidal composition in the form of an aqueous microemulsion and more particularly to a herbicidal composition in the form of an aqueous microemulsion containing as an active component a specified alkyl ester of a fluorophenoxyphenoxyalkanoic acid and water soluble salts of Bentazone.

### Background Art

Japanese Laid-open Patent Publication No. 66156/1989 discloses that some fluorophenoxyphenoxyalkanoic acids and derivatives thereof are useful as selective herbicides for controlling weeds such as barnyard grass (Echinochloa crus-galli P. Beauv.) in farmlands where there grow useful crops such as broad leaf vegetables and wheat, barley and especially rice plant. As described in the publication, the compounds together with inert additives commonly used can be used as formulations such as emulsifiable concentrates, wettable powders and granules.

On the other hand, Bentazone (3-isopropyl-1H-2,1,3-benzothiadiazine-4-(3H)-one 2,2-dioxide) and salts thereof are herbicides that are used widely as herbicides for broad leaf weeds, and in Japan Bentazone sodium salt solutions are commercially available and commonly used. However, the compounds are inactive on barnyard grass which are strong weeds for paddy field rice crop and, hence, it is necessary to use the compound in combination with other herbicides that are active on barnyard grass.

Oil soluble active components of agricultural chemicals such as the above-described fluorophenoxyphenoxyalkanoic acids and derivatives thereof are usually formulated into emulsions together with organic solvents and emulsifiers and therefore, it has been impossible to obtain uniform mixtures with aqueous formulations such as Bentazone sodium salt solutions. As a method for preparing an aqueous formulation from an oily agricultural active component, there have been developed various methods in which concentrated aqueous emulsion formulations (EW) are prepared as described in Japanese Patent Publication No. 4799/1966, Japanese Laid-open Patent Publication Nos. 80306/1982, 169401/1982, 169403/1982, 162504/1983, 162505/1983, 11850/1983, 39810/1984, 37707/1986, etc. However, these formulations are thermally unstable and, hence, it has been difficult to obtain high enough a stability to endure a prolonged storage and a wide temperature variation. As a countermeasure for solving this problem, there have been developed microemulsion formulations (of. Japanese Patent Publication Nos. 13696/1978, 17721/1983, 29761/1983 and 54928/1985, and Japanese Laid-open Patent Publication Nos. 54547/1974, 41437/1976, 122628/1977, 23123/1979, 82302/1984, and 132903/1985 and the like). They utilize a technique of solubilization, and they are transparent in appearance since the dispersed particles are very small as compared with emulsion droplets in ordinary emulsion system as well as they are thermodynamically more stable than the ordinary emulsions.

On the other hand, Japanese Laid-open Patent Publication No. 261312/1989 discloses aqueous concentrated microemulsion formulations that contain a phenoxy-phenoxy or heteroaryloxyphenoxycarboxylic acid ester based herbicide and a salt of Bentazone as active components together with one or more surfactants selected from the group consisting of calcium dodecylbenzenesulfonate, ethoxylated castor oil, ethoxylated nonylphenol, alkanol polyglycol ethers and fatty acid polyglycol esters, an organic solvent selected from aromatic hydrocarbons and ketones, and water. Also, Japanese Laid-open Patent Publication No. 305501/1992 discloses herbicides for farmlands in the form of aqueous concentrated microemulsions that contain 2-nitro-5-(substituted phenoxy)benzohydroximic acid derivatives and (±)-2-(4-chloro-2-methylphenoxy)propionic acid salt or (R)-(+)-2-(4-chloro-2-methylphenoxy)propionic acid salt (MCPP) as active components together with one or more surfactants selected from the group consisting of dodecylbenzenesulfonates, ethoxylated styrylphenyl ether and ethoxylated castor oil, an organic solvent selected from the group consisting of aromatic hydrocarbons and ketones, and water.

A main object of this invention is to provide a physically and chemically stable, uniform preparation that contains a certain kind of fluorophenoxyphenoxyalkanoic acid ester and a water-soluble salt of Bentazone and does not cause any phase separation or agglomeration.

According to experiments conducted by the present inventors, formulation of a fluorophenoxyalkanoic acid ester and a water-soluble salt of Bentazone using the emulsifier or surfactant described in Japanese Laid-open Patent Publication No. 261312/1989 cited above fails to give rise to preparations which are sufficiently stable over a wide temperature range from a low temperature to a high temperature. That is, when there is used a surfactant selected from the group consisting of calcium dodecylbenzenesulfonate, ethoxylated castor oil, ethoxylated nonylphenol, alkanol polyglycol ethers and fatty acid polyglycol esters, it was not able to obtain a stable formulation that retained uniform and transparent properties over a long period at a high temperature (around 50°C) and at a low temperature (not above 5°C). Also, when there are used emulsifiers ordinary used in agricultural emulsions (mixtures of calcium dodecylbenzenesulfonate and nonionic surfactants) and anionic surfactants such as sodium dodecylbenzenesulfonate and sodium dioctylsulfosuccinate, Bentazone causes phase separation and agglomeration, and there was obtained no satisfactory formulation.

The present inventors have conducted extensive investigation on various many surfactants with view to obtaining uniform mixtures of a certain kind of fluorophenoxyalkanoic acid ester and a water soluble salt of Bentazone, and as a result, the present inventors have found that when the specified nonionic surfactants are selected, there can be obtained transparent and uniform microemulsion formulations that are stable for a long period at high temperatures and at low temperatures. This invention is based on this discovery.

### Disclosure of the Invention

Therefore, this invention provides a herbicidal composition in the form of an aqueous concentrated microemulsion comprising:
(a) a herbicidal active component consisting of a combination of a C₁-C₈ alkyl ester of 2-(4-(2'-fluoro-4'-cyanophenoxy)phenoxy)propionic acid and a water soluble salt of 3-isopropyl-1H-2,1,3-benzothiadiazine-4-(3H)-one 2,2-dioxide;
(b) ethoxylated styrylphenol as a surfactant;
(c) one or more organic solvents selected from the group containing of aromatic hydrocarbons, ketones, fatty acid esters and aromatic carboxylic acid esters; and
(d) water.

One herbicidal active component in the herbicidal composition of this invention is a C₁-C₈ alkyl ester of 2-(4-(2'-fluoro-4'-cyanophenoxy)phenoxy)propionic acid. As the alkyl ester of the phenoxyphenoxypropionic acid, there can be cited lower (particularly C₁-C₄) alkyl esters such as particularly methyl ester, propyl ester, butyl ester, etc. The phenoxyphenoxypropionic acid esters described above may be R-enantiomer, S-enantiomer and or mixtures of these, with R-enantiomer being used preferably.

Another herbicidal active component in the herbicidal composition of this invention is a water soluble salt of 3-isopropyl-1H-2,1,3-benzothiadiazine-4-(3H)-one 2,2-dioxide (common name: Bentazone). As the water soluble salts of Bentazone, there can be cited alkali metal (e.g., Na, K) salts, ammonium salt, alkyl-ammonium salts (e.g., dimethylammonium salt) and the like. Of these salts, sodium salt is used particularly preferably.

Proportion of the above-described phenoxyphenoxypropionic acid ester to the water soluble salt of Bentazone is not limited strictly but may be varied appropriately depending on the conditions of places where the composition of this invention is applied (particularly paddy field) or the like. Preferred proportion of the phenoxyphenoxypropionic acid ester to the water soluble salt of Bentazone is within the range of 1 : 99 to 99 : 1, more preferably 5 : 95 to 60 : 40, and most preferably 9 : 91 to 50 : 50, by weight.

In this invention, as the surfactant for dispersing the herbicidal active component consisting of the phenoxyphenoxypropionic acid ester and the water soluble salt of Bentazone in combination, there can be selected from among various many surfactants available, nonionic surfactants, particularly ethoxylated styrylphenol. This is a great feature of this invention. As the ethoxylated styrylphenol, there can be cited, for example, ethylene oxide adduct of distyrylphenol or tristyrylphenol having 1 to 20, preferably 2 to 17, and more preferably 3 to 15 ethylene oxides. These ethoxylated styrylphenols may be used singly or two or more of them may be used in combination, and further in combination with other surfactants as necessary in amounts not to prevent the object of this invention. As the other surfactant component used here, there can be cited nonionic surfactants such as, for example, ethoxylated nonylphenol, ethoxylated octylphenol, ethoxylated benzylphenol, ethoxylated castor oil, polyoxyethylene alkyl ether polyoxyethylene fatty acid ester, ethoxylated alkylamine, polyoxyethylene/polyoxypropylene block copolymer, etc. There can be used anionic surfactants commonly used in agricultural formulations in small amounts within the range not to deteriorate the effects of this invention.

In this invention, one or more organic solvents selected from the group consisting of aromatic hydrocarbons, ketones, fatty acid esters and aromatic carboxylic acid esters.

As the aromatic hydrocarbons which can be used in this invention, there can be used solvents such as, for example, toluene, xylene, methylnaphthalene, etc., and mixtures of aromatic fractions from petroleum such as Solvesso 10, Solvesso 150, Solvesso 200 ("Solvesso" is a registered trademark for products of Exxon Chemical Co., Ltd.) and the like. As the ketones, aliphatic ketones, for example, cyclohexanone are preferred. As the fatty acid esters, alkyl esters of higher fatty acids, for example, methyl oleate can be used. Further, as the aromatic carboxylic acid ester, there can be cited, for example, alkyl esters of aromatic dibasic acids such as dibutyl phthalate, dioctyl phthalate, etc. Among them, the fatty acid esters and aromatic dicarboxylic acid esters may be added not only as a solvent but also for increasing biological effects of the herbicidal active component.

The herbicidal composition of this invention is converted into an emulsion by adding water to the above-described components. It may, as necessary, further contain additives, for example, diols such as propylene glycol and diethylene glycol, glycol ethers for the purpose of preventing freezing. If necessary, other water soluble or oil soluble agricultural active components may be added thereto.

The proportion of the aqueous phase to the organic phase in the composition of this invention may vary within the range of 20 : 1 to 1 : 1, preferably 15 : 1 to 4 : 1, and more preferably 12 : 1 to 8 : 1, by weight. Generally, the concentration of the herbicidal active component in the aqueous phase is 10 to 70% by weight, particularly 20 to 50% by weight while that in the organic phase is 1 to 90% by weight, particularly 10 to 70% by weight. The upper limit of the concentration id determined depending on the solubilities of the active components used. Preferably, the herbicidal composition of this invention contains:
(a) the herbicidal active component : 5 to 50% by weight, more preferably 10 to 40% by weight, and most preferably 20 to 35% by weight;
(b) the surfactant : 5 to 30% by weight, more preferably 7 to 27% by weight, and most preferably 10 to 25% by weight;
(c) the organic solvent : 1 to 30% by weight, more preferably 1.5 to 20% by weight, and most preferably 2 to 15% by weight; and
(d) water : 20 to 80% by weight, more preferably 25 to 70% by weight, and most preferably 30 to 65% by weight.

The herbicidal composition of this invention which is in the form of a microemulsion can be prepared from the above-described components as follows: that is, the aforementioned specified phenoxyphenoxypropionic acid ester is dissolved in an organic solvent charged in a mixing tank and a surfactant is added to the solution followed by stirring to obtain a uniform solution. Under stirring, an aqueous solution of a salt of Bentazone and water are added thereto slowly, which causes phase inversion so that there is formed a transparent microemulsion containing an aqueous phase as a continuous phase. A transparent, uniform microemulsion formulation can be obtained by another method in which the above-mentioned specified phenoxyphenoxypropionic acid ester is dissolved in an organic solvent in advance, and a surfactant is added thereto and mixed uniformly to prepare a solution, which solution is added dropwise in an aqueous solution containing a salt of Bentazone with stirring. The operational conditions for preparing are not limited particularly. While the operation may be carried out usually at room temperature, for example, but the mixture may be heated to about 50 to 60°C when the phenoxyphenoxypropionic acid ester is dissolved in the organic solvent, if necessary. In order to decrease the viscosity and ease the stirring, the solution of the organic acid to which a surfactant is added may be heated to a temperature above room temperature.

The herbicidal composition prepared as described above is extremely safe to paddy field rice plant and therefore can be used particularly preferably not only for controlling weeds on paddy fields but also for controlling weeds on farmlands where useful crops such as barley and wheat are cultivated. Weeds to which the herbicidal composition of this invention can be applied include, for example, Gramineae weeds such as Echinochloa crus-galli P. Beauv., Cyperacea plants such as Scirpus hotarui Ohwi and Cyperus serotinus Rottb., broad leaf weeds such as Sagitaria pygmaea Mig., Sagitaria trifolia L., Monochoria vaginalis Presl., Lindernia procumbens Philcox, etc. These weeds can be controlled effectively by post germination foliar application and leaves.

As for doses of the herbicidal composition of this invention in terms of the herbicidal active component, when applied to paddy fields, the specified phenoxyphenoxypropionic acid ester is usually within the range of 50 to 1,000 g/ha, preferably 100 to 500 g/ha, and more preferably 180 to 360 g/ha while the salts of Bentazone are applied within the range of 400 to 6,000 g/ha, preferably 1,000 to 4,000 g/ha, and more preferably 1,200 to 2,400 g/ha. More specifically, for example, in the case of a herbicidal preparation containing 3% by weight of the above-specified phenoxyphenoxypropionic acid ester and 20% by weight of sodium salt of Bentazone, it is appropriate to spray 6 to 12 kg diluted in water per ha.

### Examples

Hereafter, this invention will be explained in more detail by examples and comparative examples.

### Example 1

0.3 g (3% by weight) of butyl 2-(4-(2'-fluoro-4'-cyanophenoxy)phenoxy)propionate (hereafter, Compound A) was dissolved in 0.3 g (3% by weight) of an aromatic organic solvent (Solvesso 150 : produced by Exxon), and 1.2 g (12% by weight) of ethoxylated distyrylphenol (number of ethylene oxide unit added : 4.6) was added to the solution and the resulting mixture was mixed to obtain a uniform solution. To this solution was dropwise added an aqueous solution of 2.0 g (20% by weight) of sodium salt of Bentazone dissolved in 6.2 g (62% by weight) of water at room temperature with stirring to obtain a transparent brown microemulsion formulation. This did not cause phase separation nor agglomeration at a low temperature (0°C) and at a high temperature (60°C), and thus was stable.

### Example 2

0.3 g (3% by weight) of Compound A was dissolved in 0.2 g (2% by weight) of an aromatic organic solvent (Solvesso 200 : produced by Exxon), and 1.0 g (10% by weight) of ethoxylated tristyrylphenol (number of ethylene oxide unit added : 9.2) and 0.3 g (3% by weight) of ethoxylated distyrylphenol (number of ethylene oxide added : 12.8) were added to the solution and the resulting mixture was mixed to obtain a uniform solution. To this solution was dropwise added an aqueous solution of 2.0 g (20% by weight) of sodium salt of Bentazone dissolved in 6.2 g (62% by weight) of water at room temperature with stirring to obtain a transparent brown microemulsion formulation. This did not cause phase separation nor agglomeration at a low temperature (0°C) and at a high temperature (60°C), and thus was stable.

### Example 3

0.3 g (3% by weight) of Compound A was dissolved in 0.3 g (3% by weight) of an aromatic organic solvent (Solvesso 200 : produced by Exxon), and 1.2 g (12% by weight) of ethoxylated tristyrylphenol (number of ethylene oxide unit added : 9.2) and 0.3 g (3% by weight) of ethoxylated distyrylphenol (number of ethylene oxide added : 12.8) were added to the solution and the resulting mixture was mixed to obtain a uniform solution. To this solution was dropwise added an aqueous solution of 2.0 g (20% by weight) of sodium salt of Bentazone dissolved in 5.9 g (59% by weight) of water at room temperature with stirring to obtain a transparent brown microemulsion formulation. This did not cause phase separation nor agglomeration at a low temperature (0°C) and at a high temperature (60°C), and thus was stable.

### Example 4

0.3 g (3% by weight) of Compound A was mixed with 0.3 g (3% by weight) of an aromatic organic solvent (Solvesso 150 : produced by Exxon) and 0.3 g (3% by weight) of methyl oleate and the mixture was dissolved, and 1.3 g (13% by weight) of ethoxylated distyrylphenol (number of ethylene oxide unit added : 4.6) and 0.3 g (3% by weight) of ethoxylated nonylphenol (number of ethylene oxide added : 1.7) were added to the solution and the resulting mixture was mixed to obtain a uniform solution. To this solution was dropwise added an aqueous solution of 2.0 g (20% by weight) of sodium salt of Bentazone dissolved in 5.5 g (55% by weight) of water at room temperature with stirring to obtain a transparent brown microemulsion formulation. This did not cause phase separation nor agglomeration at a low temperature (0°C) and at a high temperature (60°C), and thus was stable.

### Example 5

3 g (3% by weight) of Compound A was dissolved in a mixture of 3 g (3% by weight) of an aromatic organic solvent (Solvesso 150 : produced by Exxon) and 3 g (3% by weight) of methyl oleate and the resulting mixture was dissolved, and 13 g (13% by weight) of ethoxylated distyrylphenol (number of ethylene oxide unit added : 4.6), 4 g (4% by weight) of ethoxylated tristyrylphenol (number of ethylene oxide unit added : 12.8), and 3 g (3% by weight) of ethoxylated nonylphenol (number of ethylene oxide added : 1.7) were added to the solution and the resulting mixture was mixed to obtain a uniform solution. To this solution was dropwise added an aqueous solution of 20 g (20% by weight) of sodium salt of Bentazone dissolved in 51 g (51% by weight) of water at room temperature with stirring to obtain a transparent brown microemulsion formulation. This did not cause phase separation nor agglomeration at a low temperature (0°C) and at a high temperature (60°C), and thus was stable.

### Comparative Example 1

Formulation was tried in the same procedure as in Example 5 except that 15 g (15% by weight) of ethoxylated castor oil (number of ethylene oxide added : 40) and 0.5 g (5% by weight) of calcium dodecylbenzenesulfonate were used as the surfactant instead of 13 g (13% by weight) of ethoxylated distyrylphenol (number of ethylene oxide unit added : 4.6), 4 g (4% by weight) of ethoxylated tristyrylphenol (number of ethylene oxide unit added : 12.8), and 3 g (3% by weight) of ethoxylated nonylphenol (number of ethylene oxide added : 1.7). However, only a turbid formulation was obtained at room temperature (20°C), which caused phase separation when left as was.

### Comparative Example 2

Formulation was tried in the same procedure as in Example 5 except that 10 g (10% by weight) of ethoxylated castor oil (number of ethylene oxide added : 40) and 1.0 g (10% by weight) of tridecylalcohol polyglycol ether (number of ethylene oxide unit added : 8) were used as the surfactant instead of 13 g (13% by weight) of ethoxylated distyrylphenol (number of ethylene oxide unit added : 4.6), 4 g (4% by weight) of ethoxylated tristyrylphenol (number of ethylene oxide unit added : 12.8), and 3 g (3% by weight) of ethoxylated nonylphenol (number of ethylene oxide added : 1.7). However, only a turbid, slightly viscous formulation was obtained at room temperature (20°C), which caused phase separation when left as was.

### Comparative Example 3

Formulation was tried in the same procedure as in Example 5 except that 5 g (5% by weight) of ethoxylated nonylphenol (number of ethylene oxide added : 3.3) and 15 g (15% by weight) of tridecylalcohol polyglycol ether (number of ethylene oxide unit added : 8) were used as the surfactant instead of 13 g (13% by weight) of ethoxylated distyrylphenol (number of ethylene oxide unit added : 4.6), 4 g (4% by weight) of ethoxylated tristyrylphenol (number of ethylene oxide unit added : 12.8), and 3 g (3% by weight) of ethoxylated nonylphenol (number of ethylene oxide added : 1.7). However, only a turbid, slightly viscous formulation was obtained at room temperature (20°C), which caused phase separation when left as was.

### Comparative Example 4

Formulation was tried in the same procedure as in Example 5 except that 10 g (10% by weight) of ethoxylated nonylphenol (number of ethylene oxide added : 3.3) and 10 g (10% by weight) of tridecylalcohol polyglycol ether (number of ethylene oxide unit added : 8) were used as the surfactant instead of 13 g (13% by weight) of ethoxylated distyrylphenol (number of ethylene oxide unit added : 4.6), 4 g (4% by weight) of ethoxylated tristyrylphenol (number of ethylene oxide unit added : 12.8), and 3 g (3% by weight) of ethoxylated nonylphenol (number of ethylene oxide added : 1.7). The resulting formulation was a transparent brown microemulsion at room temperature and a high temperature (60°C) but became turbid at a low temperature (10°C) and caused phase separation when left at 5°C.

### Test Example 1

Storage stability of the microemulsions prepared according to Examples 4 and 5 were examined in more detail under the storage conditions as shown in Table 1 below. Results obtained are shown in Table 1 below. Table 1 reveals that they are very stable physically and chemically.

**Table 1**

| Storage Condition | Example 4 | | Example 5 | |
|---|---|---|---|---|
| | Change in Appearance | Decomposition of Herbicidal Active Component | Change in Appearance | Decomposition of Herbicidal Active Component |
| 50°C for 3 Months | No | No | No | No |
| -18°C for 3 Months | No | No | No | No |
| 40°C for 7 days and 0°C for 7 days alternately in a period of 8 weeks | No | No | No | No |

When diluted in water, these formulations exhibit emulsification or good emulsification very close to solubilization, as well as good emulsification stability. After the above-described storage stability test, the formulations exhibited no deterioration of emulsifiability.

### Test Example 2

Efficacy tests were conducted using the herbicidal compositions prepared according to Examples 4 and 5.

Puddling was conducted on May 4 and paddy field rice plant seedlings (variety : Koshihikari) were transplanted using a transplanting machine on May 7. On May 8, the paddy field was divided into plots of 2.0 x 2.0 m each, and a predetermined amount of seeds of the weeds shown in Table 2 were sown or planted in each of the plots, followed by growing under natural conditions for 28 days. As for treatment with chemicals, tested were formulations prepared in Example 4 and Example 5, and a mixture obtained by mixing compound A and sodium salt of Bentazone immediately before treatment. The test formulations were diluted with water so that the contents of the active components as shown in Table 2 were obtained, and sprayed uniformly on stems and leaves of plants at a does of 400 milliliters per plot under drainage conditions. Leaf stage of the weeds at the time of the treatment was 5 for Echinochloa crus-galli, 4 for Monochoria vaginalis, 4 for Lindernia procumbens, 5 for Scirpus hotarui, 6 for Cyperus serotinus, and 4 for Sagitaria pygmaea. Observation was made of the weed controlling efficacy of the formulations on each weed on 20th day after application of the chemicals, and their phytotoxicity on paddy field rice plant, on 7th day and 14th day, based on 100 points method (0 : no activity to 100 : complete killing). The experiment was run with three replications per formulation and the average values are indicated in Table 2.

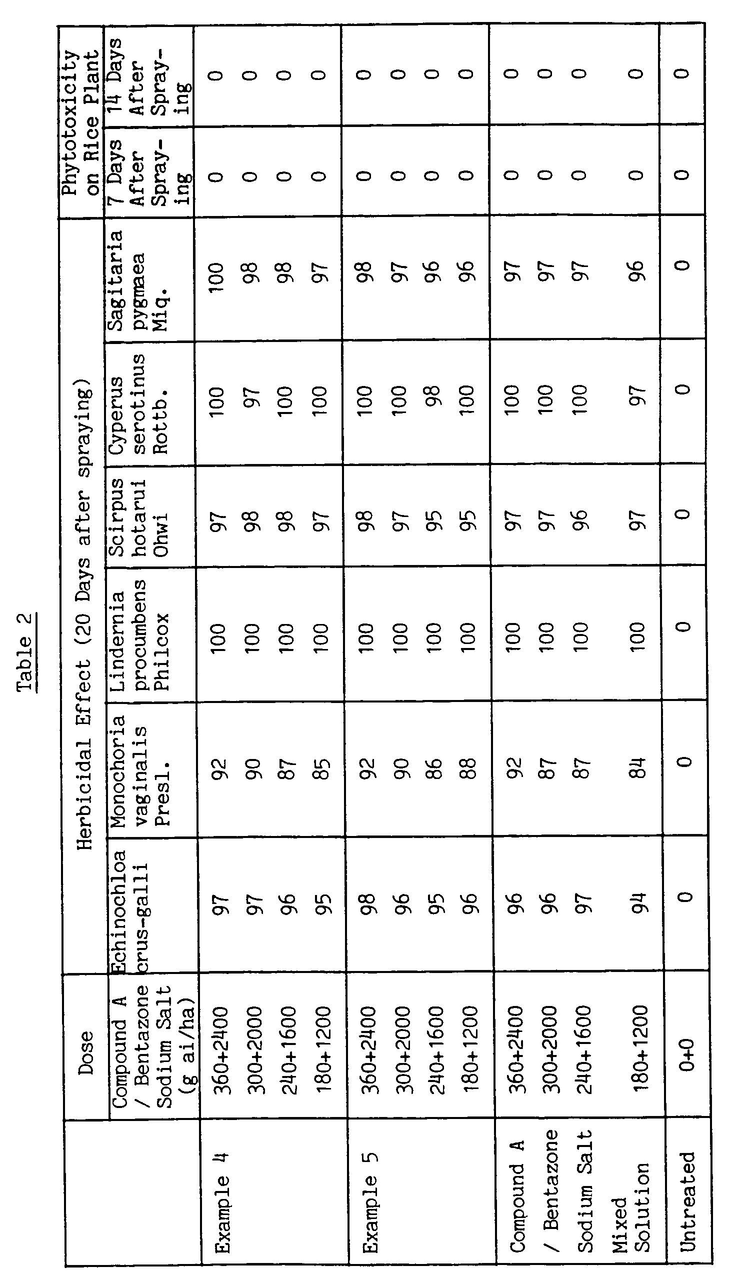

As will be clear from Table 2, the formulations of Examples 4 and 5 exhibited results of activity and phytotoxicity as good as the mixed solutions.

### Industrial Applicability

As described above, according to this invention, there can be provided herbicidal compositions in the form of microemulsion that have excellent prolonged storage stability both at high and low temperatures, that are transparent and uniform, and that are particularly useful for application on paddy fields.

Further, application of the herbicidal compositions of this invention in the form of microemulsion to paddy fields gives rise to the following advantageous effects:
(a) Since Gramineae weeds and broad leaf weeds can be controlled by one treatment, it is unnecessary to mix various types of chemicals or conduct treatments in a plurality of times. This saves man-power.
(b) The formulations are very safe for paddy field rice plant and there is no fear of phytotoxicity.
(c) The formulations comprise mainly water, and have less dangers of toxicity, malodor, and catching fire, which improves problems to humans and environments.
(d) The formulations have excellent stability and will not deteriorate after a prolonged storage.

As described above, the herbicidal compositions of this invention are useful as herbicides for paddy fields in the form of microemulsion obtained by the application of novel formulation techniques.

## Claims

1. A herbicidal composition in the form of an aqueous concentrated microemulsion comprising:
(a) a herbicidal active component consisting of a combination of a C₁-C₈ alkyl ester of 2-(4-(2'-fluoro-4'-cyanophenoxy)phenoxy)propionic acid and a water soluble salt of 3-isopropyl-1H-2,1,3-benzothiadiazine-4-(3H)-one 2,2-dioxide;
(b) ethoxylated styrylphenol as a surfactant;
(c) one or more organic solvents selected from the group consisting of aromatic hydrocarbons, ketones, fatty acid esters and aromatic carboxylic acid esters; and
(d) water.

2. The herbicidal composition of claim 1, wherein said C₁-C₈ alkyl ester of 2-(4-(2'-fluoro-4'-cyanophenoxy)phenoxy)propionic acid is methyl ester, propyl ester, or butyl ester.

3. The herbicidal composition of claim 1, wherein said C₁-C₈ alkyl ester of 2-(4-(2'-fluoro-4'-cyanophenoxy)phenoxy)propionic acid is a R-enantiomer.

4. The herbicidal composition is claim 1, wherein said water soluble salt of 3-isopropyl-1H-2,1,3-benzothiadiazine-4-(3H)-one 2,2-dioxide is sodium salt, potassium salt, ammonium salt or an alkylammonium salt.

5. The herbicidal composition of claim 1, wherein said ethoxylated styrylphenol as a surfactant is an ethylene oxide adduct of distyrylphenol or tristyrylphenol having 1 to 20, preferably 2 to 17, and more preferably 3 to 15 ethylene oxides.

6. The herbicidal composition of claim 1, wherein said solvent is selected from the group consisting of toluene, xylene, methylnaphthalene, aromatic fractions from petroleum, methyl oleate, dibutyl phthalate, and dioctyl phthalate.

7. The herbicidal composition of claim 1, a proportion by weight of said C₁-C₈ alkyl ester of 2-(4-(2'-fluoro-4'-cyanophenoxy)phenoxy)propionic acid to said water soluble salt of 3-isopropyl-1H-2,1,3-benzothiadiazine-4-(3H)-one 2,2-dioxide is 5 : 95 to 60 : 40, particularly 9 : 91 to 50 : 50.

8. The herbicidal composition of claim 1, wherein said composition contains:
| | |
|---|---|
| herbicidal component (a) | 5 to 50% by weight |
| surfactant (b) | 5 to 30% by weight |
| organic solvent (c) | 1 to 30% by weight |
| water (d) | 20 to 80% by weight |

9. The herbicidal composition of claim 1, wherein said composition contains:
| | |
|---|---|
| herbicidal component (a) | 20 to 35% by weight |
| surfactant (b) | 10 to 25% by weight |
| organic solvent (c) | 2 to 15% by weight |
| water (d) | 30 to 65% by weight |

10. The herbicidal composition of claim 1 for application to paddy field.

## Patentansprüche

1. Herbizides Mittel in Form einer wäßrigen konzentrierten Mikroemulsion, enthaltend:
(a) eine herbizide Wirkstoffkomponente, bestehend aus einer Kombination aus einem C₁-C₈-Alkylester der 2-(4-(2'-Fluor-4'-cyanophenoxy)phenoxy)propionsäure und einem wasserlöslichen Salz von 3-Isopropyl-1H-2,1,3-benzothiadiazin-4-(3H)-on-2,2-dioxid;
(b) ethoxyliertes Styrylphenol als oberflächenaktives Mittel;
(c) ein oder mehrere organische Lösungsmittel, ausgewählt aus der Gruppe, bestehend aus aromatischen Kohlenwasserstoffen, Ketonen, Fettsäureestern und aromatischen Carbonsäureestern; und
(d) Wasser.

2. Herbizides Mittel nach Anspruch 1, dadurch **gekennzeichnet,** daß der C₁-C₈-Alkylester der 2-(4-(2'-Fluor-4'-cyanophenoxy)phenoxy)propionsäure der Methylester, der Propylester oder Butylester ist.

3. Herbizides Mittel nach Anspruch 1, dadurch **gekennzeichnet,** daß der C₁-C₈-Alkylester der 2-(4-(2'-Fluor-4'-cyanophenoxy)phenoxy)propionsäure ein R-Enantiomeres ist.

4. Herbizides Mittel nach Anspruch 1, dadurch **gekennzeichnet,** daß das wasserlösliche Salz von 3-Isopropyl-1H-2,1,3-benzothiadiazin-4-(3H)-on-2,2-dioxid das Natriumsalz, das Kaliumsalz, das Ammoniumsalz oder ein Alkylammoniumsalz ist.

5. Herbizides Mittel nach Anspruch 1, dadurch **gekennzeichnet,** daß das als oberflächenaktives Mittel verwendete ethoxylierte Styrylphenol ein Ethylenoxid-Addukt von Distyrylphenol oder Tristyrylphenol mit 1 bis 20, vorzugsweise 2 bis 17 und mehr bevorzugt 3 bis 15 Ethylenoxid-Einheiten ist.

6. Herbizides Mittel nach Anspruch 1, dadurch **gekennzeichnet,** daß das Lösungsmittel aus der Gruppe, bestehend aus Toluol, Xylol, Methylnaphthalin, aromatischen Fraktionen von Erdöl, Methyloleat, Ditbutylphthalat und Dioctylphthalat ausgewählt ist.

7. Herbizides Mittel nach Anspruch 1, dadurch **gekennzeichnet,** daß das Gewichtsverhältnis des C₁-C₈-Alkylesters der 2-(4-(2'-Fluor-4'-cyanophenoxy)phenoxy)-propionsäure zu dem wasserlöslichen Salz von 3-Isopropyl-1H-2,1,3-benzothiadiazin-4-(3H)-on-2,2-dioxid 5:95 bis 60:40, insbesondere 9:91 bis 50:50 beträgt.

8. Herbizides Mittel nach Anspruch 1, dadurch **gekennzeichnet,** daß das Mittel folgendes enthält:
| | |
|---|---|
| Herbizide Komponente (a) | 5 bis 50 Gew.-% |
| Oberflächenaktives Mittel (b) | 5 bis 30 Gew.-% |
| Organisches Lösungsmittel (c) | 1 bis 30 Gew.-% |
| Wasser (d) | 20 bis 80 Gew.-%. |

9. Herbizides Mittel nach Anspruch 1, dadurch **gekennzeichnet,** daß das Mittel folgendes enthält:
| | |
|---|---|
| Herbizide Komponente (a) | 20 bis 35 Gew.-% |
| Oberflächenaktives Mittel (b) | 10 bis 25 Gew.-% |
| Organisches Lösungsmittel (c) | 2 bis 15 Gew.-% |
| Wasser (d) | 30 bis 65 Gew.-%. |

10. Herbizides Mittel nach Anspruch 1 zur Aufbringung auf ein Reisfeld.

## Revendications

1. Composition herbicide sous forme d'une microémulsion concentrée aqueuse comprenant :
a) une matière active herbicide composée d'une combinaison d'un ester d'alkyle en C₁-C₈ de l'acide 2-(4-(2'-fluoro-4'-cyanophénoxy)phénoxy)propionique et d'un sel hydrosoluble du 2,2 dioxyde de la 3-isopropyl-1H-2,1,3-benzothia-diazine-4-(3H)-one ;
b) du styrylphénol éthoxylé en tant qu'agent de surface ;
c) un ou plusieurs solvants organiques pris dans le groupe comportant des hydrocarbures aromatiques, des cétones, des esters d'acides gras et des esters d'acides carboxyliques aromatiques ;
d) l'eau.

2. Composition herbicide de la revendication 1, dans laquelle ledit ester d'alkyle en C₁-C₈ de l'acide 2-(4-(2'-fluoro-4'-cyanophénoxy)phénoxy)propionique est l'ester méthylique, l'ester propylique ou l'ester butylique.

3. Composition herbicide de la revendication 1, où ledit ester d'alkyle en C₁-C₈ de l'acide 2-(4-(2'-fluoro-4'-cyanophénoxy)phénoxy)propionique est un énantiomère R.

4. Composition herbicide de la revendication 1, où ledit sel hydrosoluble du 2,2-dioxyde de la 3-isopropyl-1H-2,1,3-benzothiadiazine-4(3H)-one est le sel sodique, le sel potassique, le sel ammonique ou un sel d'alkylammonium.

5. Composition herbicide de la revendication 1, où le styrylphénol étholyxé en tant qu'agent de surface est un produit d'addition de l'oxyde d'éthylène du distylryphénol ou du tristylryphénol ayant de 1 à 20, de préférence de 2 à 17, et plus particulièrement préféré de 3 à 15 motifs oxyde d'éthylène.

6. Composition herbicide de la revendication 1, où ledit solvant est pris dans le groupe constitué du toluène, du xylène, du méthylnaphtalène, des fractions aromatiques du pétrole, de l'oléate de méthyle, du phtalate de dibutyle et du phtalate de dioctyle.

7. Composition herbicide selon la revendication 1, qui contient un rapport en poids dudit ester d'alkyle en C₁-C₈ de l'acide 2-(4-(2'-fluoro-4'-cyanophénoxy)phénoxy)-propionique au dit sel hydrosoluble du 2,2-dioxyde de la 3-isopropyl-1H-2,1,3-benzothiadiazine-4)(3H)-one est de 5:95 à 60:40, en particulier de 9:91 à 50:50.

8. Composition herbicide de la revendication 1, où ladite composition contient :
| | |
|---|---|
| constituant herbicide (a) | de 5 à 50% en poids |
| agent de surface (b) | de 5 à 30% en poids |
| solvant organique (c) | de 1 à 30% en poids |
| eau (d) | de 20 à 80% en poids |

9. Composition herbicide de la revendication 1, où ladite composition contient :
| | |
|---|---|
| constituant herbicide (a) | de 20 à 35% en poids |
| agent de surface (b) | de 10 à 25% en poids |
| solvant organique (c) | de 2 à 15% en poids |
| eau (d) | de 30 à 65% en poids |

10. Composition herbicide de la revendication 1 destinée à être appliquée aux rizières de paddy.
